# EUROPEAN PATENT SPECIFICATION

(11) **EP 2 072 771 B1**
(45) Date of publication and mention of the grant of the patent: **02.03.2011**
(21) Application number: 08172078.1
(22) Date of filing: 18.12.2008
(51) Int. Cl.: F01N 3/01, F01N 3/022

(54) **Exhaust gas treatment device**
Abgasbehandlungsvorrichtung
Dispositif de traitement de gaz d'échappement

(30) Priority: 20.12.2007 JP 2007328821
(43) Date of publication of application: 24.06.2009
(73) Proprietor: KABUSHIKI KAISHA TOYOTA JIDOSHOKKI, Kariya-shi, Aichi 448-8671 (JP)
(72) Inventor: KATO, Yoshifumi, Kariya-shi Aichi 448-8671 (JP)
(74) Representative: TBK-Patent

(56) References cited:
- DE-T2- 60 210 557
- JP-A- 2006 200 520
- US-A- 5 707 509
- US-A- 6 036 840

## Description

### BACKGROUND OF THE INVENTION

The present invention relates to an exhaust gas treatment device.

Reduction of harmful gasses, particulate matter, gasses responsible for global warming gas such as carbon dioxide (CO₂) and the like emitted to the atmosphere from a vehicle diesel engine or the like is now an urgent need. Especially, vehicle diesel engines attract the attention of the market recently because of their low emission of the carbon dioxide as compared to vehicle gasoline engines.

However, the diesel engine discharges a lot o3fore, there have been proposed recently various types of exhaust gas treatment devices for reducing the particulate matter and nitrogen oxides emitted to the atmosphere. For example, a diesel particulate filter (DPF) is disposed in a discharge passage of a vehicle powered by a diesel engine for capturing particulate matter thereby to reduce the emission thereof.

The Japanese Utility Model Application Publication No. 2-105510 discloses a particulate filter made of a thin porous wall member. The particulate filter is formed into a cylindrical mesh body, the inner portion of which is divided by partition walls into a plurality of cells. Each cell of the mesh body has the opposite ends, and one end of the cell is open and another end is closed. A plurality of cells are arranged such that the open ends are next to the closed ends. In other words, the one open ends and the adjacent closed ends of a plurality of cells are alternately arranged.

The particulate filter, which is often referred to as "wall-flow filter", captures particulate matter in exhaust gas as follows. Exhaust gas discharged from a vehicle engine flows into the cells whose ends are opened on the side from which exhaust gas is supplied. Then, the exhaust gas flows through the partition wall (a thin porous wall member) of the cells into the adjacent cells and is discharged from the adjacent cell to the opposite side of which the exhaust gas is supplied. Particulate matter contained in the exhaust gas is captured by the partition wall while the exhaust gas flows through the partition wall.

The particulate filter disclosed in Japanese Utility Model Publication 2-105510 is capable of reducing the particulate matter of exhaust gas discharged from a diesel engine to the atmosphere. However, a separate device is required for reducing the emission of nitrogen oxides to the atmosphere. Thus, at least two treatment devices are required to reduce both the emissions of particulate matter and nitrogen oxides in exhaust gas. Obviously, installation of these two different devices will require additional space in the vehicle.

The document JP 2006 200520 shows a device for reducing nitrogen oxides as well as capturing and oxidizing particulate matter. This device consists of a filter and an electrode assembly.

The present invention is directed to providing an improved exhaust gas treatment device for reducing nitrogen oxides, as well as capturing and oxidizing particulate matter in exhaust gas from a vehicle. Thus, the installation of such a device does not require a large space.

### SUMMARY OF THE INVENTION

In accordance with the present invention, an exhaust gas treatment device has an electrode assembly. The electrode assembly has an ion-conducting layer, anode and cathode electrodes, and a filter. The ion-conducting layer has proton conductivity. The anode and cathode electrodes are provided spaced apart from each other on the ion-conducting layer. The filter is provided between the anode and cathode electrodes on the ion-conducting layer and the thickness of the filter is greater than that of the anode and cathode electrodes for capturing particulate matter in exhaust gas. One part of the electrode assembly is overlapped with different part thereof in such a way that the filter of the one part thereof supports the different part thereof so that a space is formed between the two parts thereof. The anode and cathode electrodes, and the filter are arranged such that exhaust gas supplied to the electrode assembly contacts with the anode electrode, and flows through the filter and contacts with the cathode electrode.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is a perspective view of an exhaust gas treatment device according to a first preferred embodiment of the present invention;
Fig. 2 is a perspective view of a base plate of the exhaust gas treatment device according to the first preferred embodiment of the present invention;
Fig. 3 is a schematic view of a plane taken along the line III-III in Fig. 2;
Fig. 4 is a schematic fragmentary view taken along the line IV-IV in Fig. 3; and
Fig. 5 is a perspective view of an exhaust gas treatment device according to a second preferred embodiment of the present invention.

### DETAILED DESCRIPTION OF THE PREFERRED EMBODIMENTS

The following will describe the embodiments of the present invention with reference to the accompanying drawings.

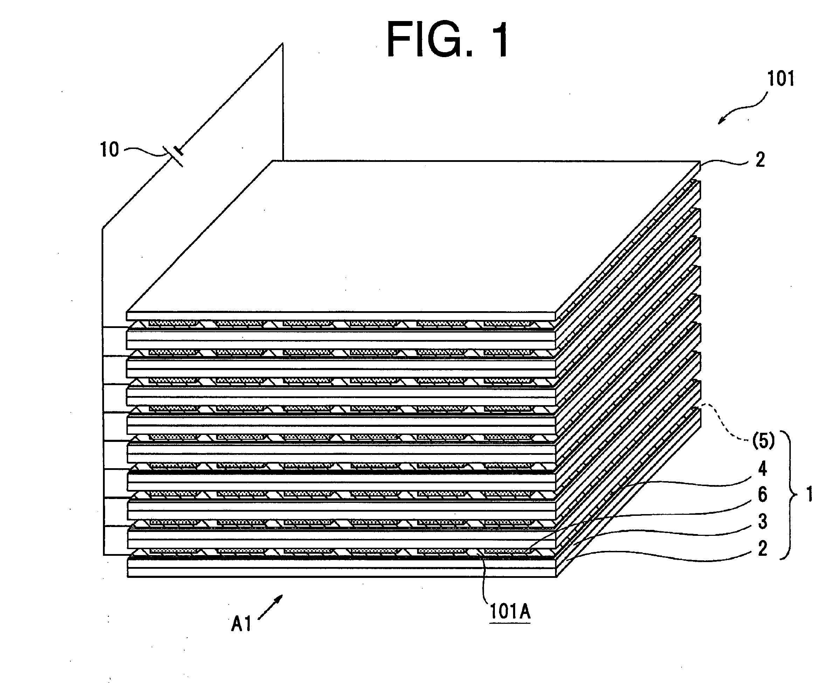

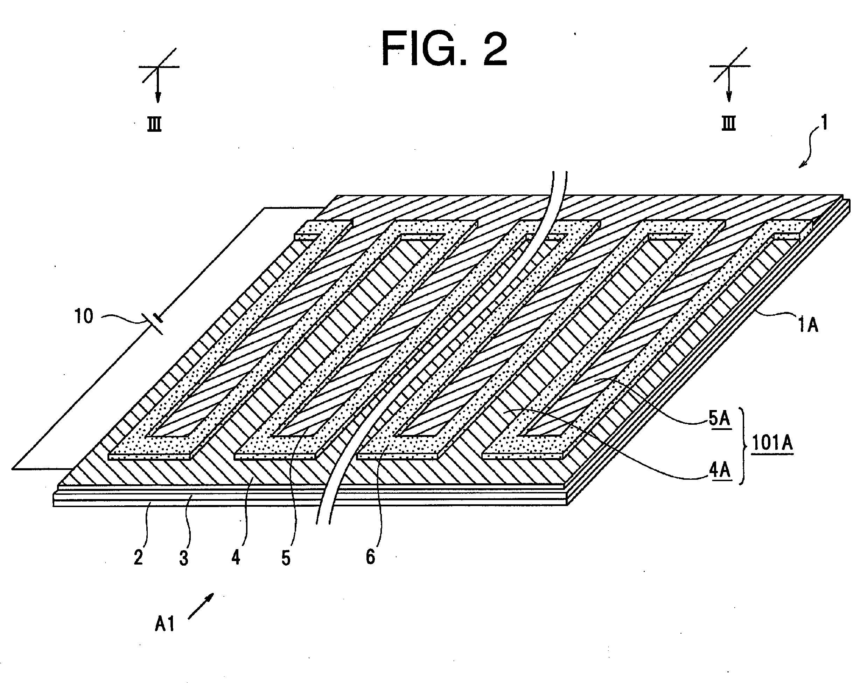

Firstly, an exhaust gas treatment device 101 of the first preferred embodiment of the present invention will be described with reference to Figs. 1 through 4. The exhaust gas treatment device 101 of the first preferred embodiment is used for purifying exhaust gas discharged from a diesel engine. Referring to Fig. 1, the exhaust gas treatment device 101 is formed by stacking a plurality of rectangular base plates 1 of which the shape is shown in Fig. 2.

Referring to Fig. 2, the base plate 1 includes a support plate 2 of a rectangular shape and an ion-conducting layer 3 formed on one entire surface of the support plate 2. The ion-conducting layer 3 is of an ion-conducting layer having proton conductivity. Specifically, the ion-conducting layer 3 is formed such a way that ion-conducting material in the form of a paste is coated on one surface of the support plate 2, and the ion-conducting material is burned. The support plate 2 is made of a heat resistant and electrically insulating material such as insulated metal, ceramic, or the like. The ion-conducting layer 3 is made of a proton conductor having a property that a proton moves therein under an electric potential gradient or a chemical potential gradient of hydrogen or water. Material for the proton conductor includes a perovskite-type metallic oxide MM'₁-XRxO₃-α (wherein M is barium (Ba), strontium (Sr) or calcium (Ca), M' is cerium (Ce) or zirconium (Zr), and R is yttrium (Y) or ytterbium (Yb), such as SrZrxYbi -xO₃-α, SrCeO₃, BaCeO₃, CaZrO₃, SrZrO₃, and the like), phosphate (such as SiO₂-P₂Oₛ based glass) or metal doped SnxIn₁-xP₂O₇ (such as SnP₂O₇).

An anode electrode 4 is screen-printed in the form of a comb on the surface of the ion-conducting layer 3 which is formed on the support plate 2. A cathode electrode 5 is screen-printed also in the form of a comb on the same surface of the ion-conducting layer 3. The anode electrode 4 and the cathode electrode 5 are formed as follows. The teeth of the comb shape of the anode electrode 4 and the teeth of the comb shape of the cathode electrode 5 are directed in opposite directions. Each tooth of the anode electrode 4 is positioned within a space between any two adjacent teeth of the cathode electrode 5 without contacting with the two adjacent teeth. The anode electrode 4 and the cathode electrode 5 are made of a noble metal such as platinum (Pt), palladium (Pd) and rhodium (Rh), an alloy or a composite thereof. The anode electrode 4 and the cathode electrode 5 may be made of the same material or of different materials.

A porous wall 6 is formed in each space between any two adjacent teeth of the anode electrode 4 and the cathode electrode 5 on the ion-conducting layer 3. The porous wall 6 has a rectangular cross-section and serves as a filter. The porous wall 6 is made of a porous material such as a ceramic. The porous wall 6 is formed by applying a pasty porous material on the ion-conducting layer 3 into a shape corresponding to the shapes of the anode electrode 4 and the cathode electrode 5 which are provided by later process, and subsequently burning the applied pasty porous material. The porous wall 6 includes platinum (Pt) serving as a catalyst.

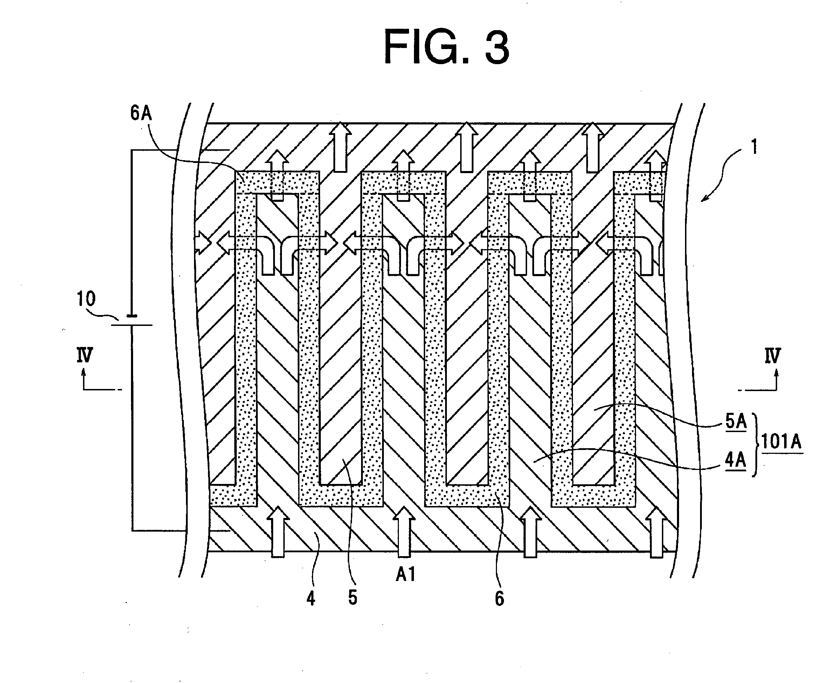

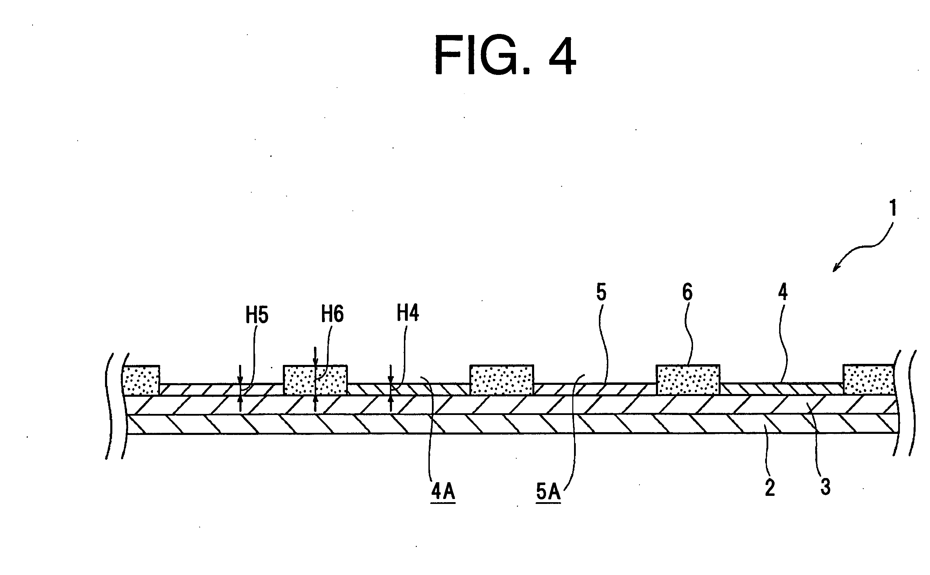

The porous wall 6 has a continuous strip shape forming a square wave shape similar to a series of substantially S-shaped curves and separating the anode electrode 4 from the cathode electrode 5 on the ion-conducting layer 3. Accordingly, as apparent from Fig. 3, the length of the porous wall 6 in contact with the anode electrode 4 and the cathode electrode 5 is increased. As shown in Fig. 4, the porous wall 6 has a substantially uniform thickness H6 that is larger than the thicknesses H4 and H5 of the anode electrode 4 and the cathode electrode 5, respectively. The base plate 1 having the anode electrode 4, the cathode electrode 5, the porous wall 6 and the ion-conducting layer 3 serves as an electrode assembly.

Referring back to Fig. 1, with the base plates 1 of such a structure stacked one on another, each porous wall 6 of the base plate 1 supports its upper adjacent base plate 1 and forms a space 101A or a clearance with its upper adjacent base plate 1. The space 101A forms a passage of the exhaust gas treatment device 101 through which exhaust gas flows. Referring to Fig. 2, the porous wall 6 has a continuous strip shape forming a square wave shape similar to a series of substantially S-shaped curves, so that the space 101A is partitioned along the wave shape. A support plate 2 is stacked on the top of the uppermost base plate 1. Thus, the exhaust gas treatment device 101 is formed by stacking the base plates 1. And, the exhaust gas treatment device 101 has a honeycomb structure in which the inner space thereof is partitioned into cells by the support plate 2 and the porous wall 6. The anode electrode 4 of each base plate 1 is connected to a positive terminal of a direct current power source 10, while the cathode electrode 5 of each base plate 1 is connected to a negative terminal of the direct current power source 10.

The following will describe the operation of the exhaust gas treatment device 101 according to the first preferred embodiment of the present invention with reference to Figs. 1 through 4. Referring to Fig. 1, exhaust gas discharged from a diesel engine (not shown) is supplied to the exhaust gas treatment device 101 in the arrow direction A1, and then flows through spaces 101A. As apparent from Fig. 3, exhaust gas is supplied from the side of the anode electrode 4 of the exhaust gas treatment device 101.

Referring to Fig. 2, the space 101 A between any two base plates 1 is separated by the porous wall 6 into an anode electrode space 4A and a cathode electrode space 5A. Thus, gas in the anode electrode space 4A or the cathode electrode space 5A can pass through the porous wall 6 serving as a wall-flow filter. As shown in Fig. 3, all exhaust gas supplied into the space 101A in the arrow direction A1 contacts with the anode electrode 4 of the anode electrode space 4A, and then flows through the porous wall 6 into the cathode electrode space 5A. The exhaust gas in the cathode electrode space 5A contacts with the cathode electrode 5 and is finally discharged out of the exhaust gas treatment device 101. Therefore, exhaust gas passing through the space 101A is processed through the following reaction with the anode electrode 4, the porous wall 6 and the cathode electrode 5.

Referring to Fig. 3, when the direct current power source 10 applies voltage between the anode electrode 4 and the cathode electrode 5, hydrogen ion and oxygen ion (or active oxygen) are generated by electrolysis from water contained in exhaust gas, as shown by the chemical formula below.

H₂O -> 2H⁺ + O₂⁻

When the exhaust gas flows through the porous wall 6, particulate matter contained in exhaust gas such as carbon and the like is captured by the porous wall 6. The particulate matter in the porous wall 6 is oxidized by oxygen ion generated in the anode electrode 4 to carbon dioxide and the like. Oxygen ion which is an active oxygen has a high chemical reactivity in comparison to unionized oxygen and, therefore, this oxidizing reaction takes place sufficiently under the temperature of the exhaust gas itself. The porous wall 6 contains platinum (Pt) as a catalyst, which makes lower the oxidizing reaction temperature. Thus, particulate matter in exhaust gas is captured and oxidized to carbon dioxide performed by the anode electrode 4 and the porous wall 6 and the like for purification of the exhaust gas.

Hydrogen ion generated at the anode electrode 4 is transmitted to the cathode electrode 5 through the ion-conducting layer 3 positioned under the porous wall 6. Then, nitrogen oxides in exhaust gas flowing through the porous wall 6 is reduced at the cathode electrode 5 by a reaction into nitrogen with the hydrogen ion transmitted from the anode electrode 4 to the cathode electrode 5 through the ion-conducting layer 3, as shown by the chemical formula below.

NO+2H⁺+2e→1/2N₂+H₂O

In other words, nitrogen oxides in exhaust gas are reduced to nitrogen by the cathode electrode 5 and the hydrogen ion transmitted through the ion-conducting layer 3 for purification of the exhaust gas.

As described above, the exhaust gas treatment device 101 of the first preferred embodiment includes the base plate 1 having the ion-conducting layer 3 with proton conductivity, the anode electrode 4, the cathode electrode 5 and the porous wall 6. The anode electrode 4 and the cathode electrode 5 are spaced apart from each other on the ion-conducting layer 3. The porous wall 6 is provided between the anode electrode 4 and the cathode electrode 5. The porous wall 6 is formed such that the height H6 thereof is greater than the height H4 of the anode electrode 4 and the height H5 of the cathode electrode 5. The base plates 1 are stacked in such a way that each porous wall 6 supports the base plates 1 so that the passage through which exhaust gas flows is formed between any two adjacent base plates 1. The anode electrode 4, the cathode electrode 5 and the porous wall 6 are arranged such that exhaust gas supplied into the stacked base plates 1 contacts with the anode electrode 4, flows through the porous wall 6 and contacts with the cathode electrode 5 in this order.

In purifying exhaust gas according to the exhaust gas treatment device 101, electric voltage is applied across the anode electrode 4 and the cathode electrode 5. Then, hydrogen ion (proton) and oxygen ion are separated by electrolysis from water contained in exhaust gas supplied to the stacked base plates 1. Particulate matter in exhaust gas such as carbon and the like is captured by the porous wall 6, and then oxidized to carbon dioxide by oxygen ion generated at the anode electrode 4. Hydrogen ion (proton) generated at the anode electrode 4 is transmitted to the cathode electrode 5 through the ion-conducting layer 3 having proton conductivity. Nitrogen oxides in exhaust gas passing through the porous wall 6 are reduced by the transmitted hydrogen ion into nitrogen at the cathode electrode 5. Thus, the exhaust gas treatment device 101 is capable of reducing nitrogen oxides contained in exhaust gas, as well as capturing and oxidizing particulate matter contained in exhaust gas for purification of the exhaust gas.

The porous wall 6 has a continuous strip shape forming a square wave shape similar to a series of substantially S-shaped curves. Thus, the surface of the anode electrode 4 and the cathode electrode 5 contactable with exhaust gas and also the surface of the porous wall 6 in contact with the anode electrode 4 and the cathode electrode 5 are enlarged on the base plate 1 of a limited size. Thus, the capacity of the exhaust gas treatment device 101 to capture particulate matter contained in exhaust gas, to oxidize the particulate matter at the anode electrode 4 and to reduce nitrogen oxides at the cathode electrode 5 may be improved.

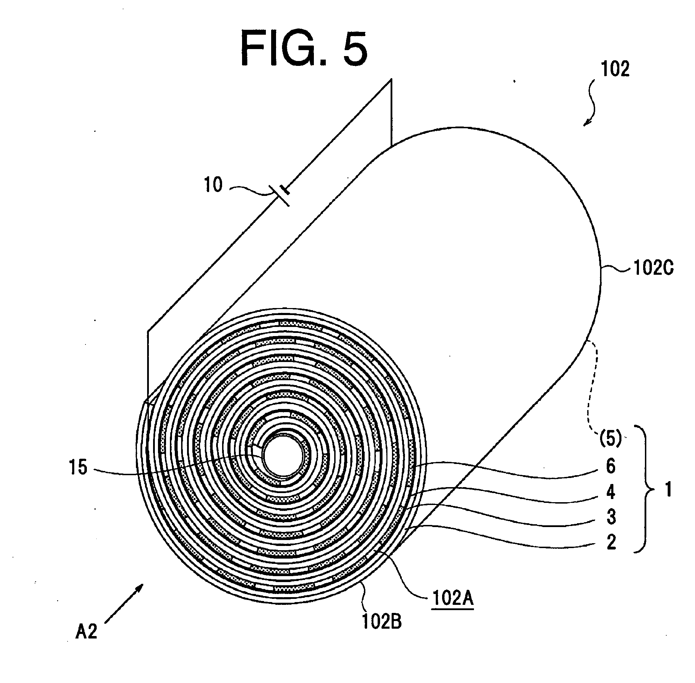

The second preferred embodiment of the present invention differs from the first preferred embodiment in that the exhaust gas treatment device 102 according to the second embodiment is formed such that the base plate 1 of the first preferred embodiment is extended in the perpendicular direction to the arrow direction A1 in Figs. 1, 2. And, as shown in Fig. 5, the extended base plate 1 is wound around a cylindrical core 15 into a roll. For the sake of convenience of description, like or same parts or elements will be indicated by the same reference numeral as those which have been used in the first embodiment and the description thereof will be omitted.

Referring to Fig. 5, the exhaust gas treatment device 102 is formed such that the base plate 1 is wound around the core 15 from one end 1 A of the base plate 1 (Fig. 2) into a roll with the surface of the base plate 1 having the porous wall 6 which faces inward of the roll. The core 15 may be made of any heat-resistant and electrically insulating material. The core 15 of the second preferred embodiment is made of an insulated hollow cylindrical metal tube. Both ends of the core 15 are closed by covers (not shown) for preventing exhaust gas from flowing into the hollow cylindrical metal tube of the core 15. The base plate 1 wound around the core 15 should be made of a flexible material. Thus, each of the support plate 2 and the porous wall 6 is not made of ceramic but of flexible metal. The positive electrode of the direct current power source 10 is connected to the anode electrode 4 on one end 102B of the exhaust gas treatment device 102 located on the side thereof to which exhaust gas flowing in arrow direction A2 is supplied. The negative electrode of the direct current power source 10 is connected to the cathode electrode 5 on the end 102C of the exhaust gas treatment device 102 located opposite from the end 102B.

Exhaust gas discharged from diesel engine (not shown) and supplied in arrow direction A2 flows through the end 102B of the exhaust gas treatment device 102. Then, the exhaust gas flows through the space 102A formed between any two layers of the base plate 1 as viewed radially of the exhaust gas treatment device 102. Finally, the exhaust gas is discharged through the opposite end 102C. With voltage applied across the anode electrode 4 and the cathode electrode 5 by the direct current power source 10, particulate matter contained in exhaust gas flowing through the space 102A is captured and oxidized and the nitrogen oxides are reduced for purification of exhaust gas. The other structures and operation are the same as those of the exhaust gas treatment device 101 of the first preferred embodiment.

As described above, the advantages similar to those of the first preferred embodiment are obtained in the exhaust gas treatment device 102 of the second preferred embodiment. Since the exhaust gas treatment device 102 is formed such that only single base plate 1 is wound around the core 15, process of cutting the base plate 1 is unnecessary. Therefore, the exhaust gas treatment device 102 is easier to manufacture than the exhaust gas treatment device 101 of the first preferred embodiment.

The exhaust gas treatment devices 101, 102 of the first and second preferred embodiments are formed such that a plurality of the base plate 1 are stacked one on another or one base plate 1 is wound into a roll. The present invention is not limited to the above-described embodiments, but the exhaust gas treatment device of the present invention may be formed by folding the base plate 1.

The porous wall 6 of the first and second preferred embodiments is made of a porous material and has a continuous strip shape forming a square wave shape similar to a series of S-shaped curves. Alternatively, a bottom portion 6A of the porous wall 6 shown in Fig. 3 may be made of a non-porous material. Thus, exhaust gas flowing into the anode electrode space 4A in the arrow directions A1, A2 and then flowing through the porous wall 6 is not concentrated at the bottom portion 6A but distributed through any other larger portion of the porous wall 6. Therefore, deterioration of filtering performance of the porous wall 6 due to the concentration of exhaust gas may be prevented. In addition, the areas of the anode electrode 4 and the cathode electrode 5 adjacent to the porous wall 6 contactable with exhaust gas may be increased, so that the treatment amount of particulate matter and nitrogen oxides contained in exhaust gas may be increased. Therefore, the exhaust gas treatment performance of the exhaust gas treatment devices 101, 102 may be improved.

In the first and second preferred embodiments, a nitrogen oxide (NOx) storage material capable of storing nitrogen oxides (NOx) may be disposed on the surface of the cathode electrode 5. Material for storing nitrogen oxides (NOx) includes barium (Ba) and the like. Thus, nitrogen oxides contained in exhaust gas flowing through the porous wall 6 are temporarily captured by the nitrogen oxide (NOx) storage material. In the first and second preferred embodiments, the ion-conducting layer 3 is formed on one surface of the support plate 2. Alternatively, the ion-conducting layer 3 may be formed on both surfaces of the support plate 2. As a result, hydrogen ion generated in the anode electrode 4 is transmitted to the cathode electrode 5 through the ion-conducting layer 3 formed above and below the respective spaces 101A, 102A. Thus, the reducing performance of the cathode electrode 5 is improved, and eventually, the capacities of the exhaust gas treatment devices 101, 102 are improved.

In the first and second preferred embodiments, a film heater may be disposed on the surface of the support plate 2 opposite to the surface thereof on which the ion-conducting layer 3 is formed. The film heater heating the entire inner space of the exhaust gas treatment devices 101, 102 helps to improve the chemical reactivity at the anode electrode 4 and the cathode electrode 5, as well as the hydrogen ion conductivity at the ion-conducting layer 3. Therefore, an exhaust gas treatment performance of the exhaust gas treatment devices 101, 102 may be improved.

Therefore, the present examples and embodiments are to be considered as illustrative and not restrictive, and the invention is not to be limited to the details given herein but may be modified within the scope of the appended claims.

An exhaust gas treatment device includes an electrode assembly The electrode assembly has an ion-conducting layer, anode and cathode electrodes, and a filter. The anode and cathode electrodes are provided spaced apart from each other on the ion-conducting layer having proton conductivity. The filter is provided between the anode and cathode electrodes and the thickness of the filter is greater than that of the anode and cathode electrodes for capturing particulate matter in exhaust gas. One part of the electrode assembly is overlapped with different part thereof in such a way that the filter of the one part thereof supports the different part thereof so that a space is formed between the two parts thereof. The anode and cathode electrodes and the filter are arranged such that exhaust gas supplied to the electrode assembly contacts with the anode electrode, and flows through the filter and contacts with the cathode electrode.

## Claims

1. An exhaust gas treatment device (101, 102) comprising:
an electrode assembly (1) having:
an ion-conducting layer (3) having proton conductivity;
an anode electrode (4) and a cathode electrode (5) provided spaced apart from each other on the ion-conducting layer (3); and
a filter (6) provided between the anode electrode (4) and the cathode electrode (5) on the ion-conducting layer (3) and the thickness of the filter (6) is greater than the thickness of the anode electrode (4) and the cathode electrode (5), the filter capturing particulate matter in exhaust gas,
**characterized in that** one part of the electrode assembly (1) is overlapped with different part of the electrode assembly (1) in such a way that the filter (6) of one part of the electrode assembly (1) supports the different part of the electrode assembly (1) so that a space (101A, 102A) is formed between the two parts of electrode assembly (1),
and **in that** the anode electrode (4), the cathode electrode (5) and the filter (6) are arranged such that exhaust gas supplied to the electrode assembly (1) contacts with the anode electrode (4), and flows through the filter (6) and contacts with the cathode electrode (5).

2. The exhaust gas treatment device (101, 102) according to claim 1, **characterized in that** the anode electrode (4) and the cathode electrode (5) are formed of a comb shape having teeth, and the one tooth of one of electrodes (4, 5) is positioned between two adjacent teeth of another electrode (4, 5).

3. The exhaust gas treatment device (101, 102) according to claim 1 or 2, **characterized in that** the filter (6) has a continuous strip shape.

4. The exhaust gas treatment device (101, 102) according to any one of claims 1 through 3, **characterized in that** the filter (6) forms a series of substantially S-shaped curves.

5. The exhaust gas treatment device (101, 102) according to any one of claims 1 through 4, **characterized in that** the filter (6) forms a square wave shape.

6. The exhaust gas treatment device (101, 102) according to any one of claims 1 through 5, **characterized in that** the electrode assembly (1) includes a support plate, and **in that** the ion-conducting layer (3) is formed thereon.

7. The exhaust gas treatment device (101) according to any one of claims 1 through 6, **characterized in that** the exhaust gas treatment device (101) has a plurality of the electrode assemblies (1), which are stacked one on another in such a way that the filter (6) of the one electrode assembly (1) supports the another electrode assembly (1) so that a space (101 A) is formed between the any two adjacent electrode assemblies (1).

8. The exhaust gas treatment device (101) according to any one of claims 1 through 7, **characterized in that** the filter (6) is made of ceramic having pores.

9. The exhaust gas treatment device (102) according to any one of claims 1 through 6, **characterized in that** the electrode assembly (1) is in the shape of a plate being wound into a roll.

10. The exhaust gas treatment device (101, 102) according to any one of claims 1 through 9, **characterized in that** a nitrogen oxide storage material capable of storing nitrogen oxides is disposed on the surface of cathode electrode (5).

11. The exhaust gas treatment device (101, 102) according to any one of claims 1 through 10, **characterized in that** each tooth of the anode electrode (4) is positioned within a space (101A) between any two adjacent teeth of the cathode electrode (5) without contacting with the two adjacent teeth, and the filter (6) provides the space (101 A) on the ion-conducting layer (3).

## Patentansprüche

1. Abgasbehandlungsvorrichtung (101, 102) umfassend:
eine Elektrodenanordnung (1) mit:
einer Ionen leitfähigen Schicht (3) mit Protonenleitfähigkeit;
einer Anoden-Elektrode (4) und einer Kathoden-Elektrode (5), die voneinander beabstandet auf der Ionen leitfähigen Schicht (3) bereitgestellt sind; und
einem Filter (6), der zwischen der Anoden-Elektrode (4) und der Kathoden-Elektrode (5) auf der Ionen leitfähigen Schicht (3) bereitgestellt ist und wobei die Dicke des Filters (6) größer als die Dicke der Anoden-Elektrode (4) und der Kathoden-Elektrode (5) ist, wobei der Filter Partikel in einem Abgas einfängt,
**dadurch gekennzeichnet, dass** ein Teil der Elektrodenanordnung (1) mit einem anderen Teil der Elektrodenanordnung (1) so überlappt ist, dass der Filter (6) des einen Teils der Elektrodenanordnung (1) den anderen Teil der Elektrodenanordnung (1) so trägt, dass ein Abstand (101A, 102A) zwischen den beiden Teilen der Elektrodenanordnung (1) gebildet ist,
und **dadurch**, dass die Anoden-Elektrode (4), die Kathoden-Elektrode (5) und der Filter (6) so angeordnet sind, dass zu der Elektrodenanordnung (1) zugeführtes Abgas mit der Anoden-Elektrode (4) in Kontakt kommt und durch den Filter (6) fließt und mit der Kathoden-Elektrode (5) in Kontakt kommt.

2. Abgasbehandlungsvorrichtung (101, 102) nach Anspruch 1, **dadurch gekennzeichnet, dass** die Anoden-Elektrode (4) und die Kathoden-Elektrode (5) kammförmig mit Zähnen gebildet sind, und der eine Zahn einer der Elektroden (4, 5) zwischen zwei benachbarten Zähnen einer anderen Elektrode (4, 5) positioniert ist.

3. Abgasbehandlungsvorrichtung (101, 102) nach Anspruch 1 oder 2, **dadurch gekennzeichnet, dass** der Filter (6) eine fortlaufende Streifenform aufweist.

4. Abgasbehandlungsvorrichtung (101, 102) nach einem der Ansprüche 1 bis 3, **dadurch gekennzeichnet, dass** der Filter (6) eine Reihe von im Wesentlichen S-förmigen Kurven bildet.

5. Abgasbehandlungsvorrichtung (101, 102) nach einem der Ansprüche 1 bis 4, **dadurch gekennzeichnet, dass** der Filter (6) eine Rechteck-Wellenform bildet.

6. Abgasbehandlungsvorrichtung (101, 102) nach einem der Ansprüche 1 bis 5, **dadurch gekennzeichnet, dass** die Elektrodenanordnung (1) eine Trägerplatte enthält, und dass darauf ein die Ionen leitfähige Schicht (3) gebildet ist.

7. Abgasbehandlungsvorrichtung (101) nach einem der Ansprüche 1 bis 6, **dadurch gekennzeichnet, dass** die Abgasbehandlungsvorrichtung (101) eine Vielzahl von Elektrodenanordnungen (1) aufweist, die aufeinander so gestapelt sind, dass der Filter (6) der einen Elektrodenanordnung (1) die andere Elektrodenanordnung (1) so trägt, dass zwischen zwei beliebigen benachbarten Elektrodenanordnungen (1) ein Abstand (101A) gebildet ist.

8. Abgasbehandlungsvorrichtung (101) nach einem der Ansprüche 1 bis 7, **dadurch gekennzeichnet, dass** der Filter (6) aus einer Keramik mit Poren gebildet ist.

9. Abgasbehandlungsvorrichtung (102) nach einem der Ansprüche 1 bis 6, **dadurch gekennzeichnet, dass** die Elektrodenanordnung (1) die Form einer als eine Rolle gewickelte Platte aufweist.

10. Abgasbehandlungsvorrichtung (101, 102) nach einem der Ansprüche 1 bis 9, **dadurch gekennzeichnet, dass** ein Stickoxid-Speichermaterial, das Stickoxide speichern kann, auf der Oberfläche der Kathoden-Elektrode (5) platziert ist.

11. Abgasbehandlungsvorrichtung (101, 102) nach einem der Ansprüche 1 bis 10, **dadurch gekennzeichnet, dass** jeder Zahn der Anoden-Elektrode (4) innerhalb eines Abstands (101A) zwischen zwei beliebigen benachbarten Zähne der Kathoden-Elektrode (5) positioniert ist, ohne die zwei benachbarten Zähne zu kontaktieren, und dass der Filter (6) den Abstand (101A) auf der Ionen leitfähigen Schicht (3) bereitstellt.

## Revendications

1. Dispositif de traitement de gaz d'échappement (101, 102) comprenant :
un ensemble d'électrodes (1) comportant :
une couche conductrice d'ions (3) présentant une conductivité protonique ;
une électrode anodique (4) et une électrode cathodique (5) prévues à distance l'une de l'autre sur la couche conductrice d'ions (3) ; et
un filtre (6) prévu entre l'électrode anodique (4) et l'électrode cathodique (5) sur la couche conductrice d'ions (3) et l'épaisseur du filtre (6) est supérieure à l'épaisseur de l'électrode anodique (4) et de l'électrode cathodique (5), le filtre (5) capturant des matières particulaires dans le gaz d'échappement,
**caractérisé en ce qu'**une partie de l'ensemble d'électrodes (1) est recouverte d'une partie différente de l'ensemble d'électrodes (1) de telle sorte que le filtre (6) d'une partie de l'ensemble d'électrodes (1) supporte la partie différente de l'ensemble d'électrodes (1) de manière à former un espace (101A, 102A) entre les deux parties de l'ensemble d'électrodes (1),
et **en ce que** l'électrode anodique (4), l'électrode cathodique (5) et le filtre (6) sont agencés de façon telle que le gaz d'échappement alimenté à l'ensemble d'électrodes (1) vient en contact avec l'électrode anodique (4), et s'écoule à travers le filtre (6) et vient en contact avec l'électrode cathodique (5).

2. Dispositif de traitement de gaz d'échappement (101, 102) selon la revendication 1, **caractérisé en ce que** l'électrode anodique (4) et l'électrode cathodique (5) ont la forme d'un peigne pourvu de dents et **en ce qu'**une dent de l'une des électrodes (4, 5) est positionnée entre deux dents adjacentes d'une autre électrode (4, 5).

3. Dispositif de traitement de gaz d'échappement (101, 102) selon la revendication 1 ou 2, **caractérisé en ce que** le filtre (6) a la forme d'une bande continue.

4. Dispositif de traitement de gaz d'échappement (101, 102) selon l'une quelconque des revendications 1 à 3, **caractérisé en ce que** le filtre (6) forme une série de courbes sensiblement en forme de S.

5. Dispositif de traitement de gaz d'échappement (101, 102) selon l'une quelconque des revendications 1 à 4, **caractérisé en ce que** le filtre (6) a une forme d'onde carrée.

6. Dispositif de traitement de gaz d'échappement (101, 102) selon l'une quelconque des revendications 1 à 5, **caractérisé en ce que** l'ensemble d'électrodes (1) comprend une plaque support et **en ce que** la couche conductrice d'ions (3) est formée sur celle-ci.

7. Dispositif de traitement de gaz d'échappement (101, 102) selon l'une quelconque des revendications 1 à 6, **caractérisé en ce que** le dispositif de traitement de gaz d'échappement (101) présente une pluralité des ensembles d'électrodes (1) qui sont empilés les uns sur les autres de telle façon que le filtre (6) d'un ensemble d'électrodes (1) supporte l'autre ensemble d'électrodes (1) de façon à former un espace (101A) entre l'un quelconque des deux ensembles d'électrodes (1) adjacents.

8. Dispositif de traitement de gaz d'échappement (101, 102) selon l'une quelconque des revendications 1 à 7, **caractérisé en ce que** le filtre (6) est réalisé en céramique ayant des pores.

9. Dispositif de traitement de gaz d'échappement (101, 102) selon l'une quelconque des revendications 1 à 6, **caractérisé en ce que** l'ensemble d'électrodes (1) a la forme d'une plaque enroulée pour former un rouleau.

10. Dispositif de traitement de gaz d'échappement (101, 102) selon l'une quelconque des revendications 1 à 9, **caractérisé en ce qu'**un matériau de stockage d'oxydes d'azote capable de stocker des oxydes d'azote est disposé sur la surface de l'électrode cathodique (5).

11. Dispositif de traitement de gaz d'échappement (101, 102) selon l'une quelconque des revendications 1 à 10, **caractérisé en ce que** chaque dent de l'électrode anodique (4) est positionnée à l'intérieur d'un espace (101A) entre deux quelconques dents adjacentes de l'électrode cathodique (5) sans être en contact avec les deux dents adjacentes, et **en ce que** le filtre (6) crée l'espace (101A) sur la couche conductrice d'ions (3).
